(19) Europäisches Patentamt

European Patent Office

Office européen des brevets

(11) **EP 1 720 317 A2**

(12) **DEMANDE DE BREVET EUROPEEN**

(43) Date de publication:
**08.11.2006 Bulletin 2006/45**

(51) Int Cl.:
**H04L 29/06** *(2006.01)*

(21) Numéro de dépôt: **06118560.9**

(22) Date de dépôt: **16.05.2003**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **31.05.2002 FR 0206709**

(62) Numéro(s) de document de la (des) demande(s) initiale(s) en application de l'article 76 CBE:
**03291148.9 / 1 367 745**

(71) Demandeur: **ALCATEL**
**75008 Paris (FR)**

(72) Inventeurs:
• **Farineau, Jean**
**92300 Levallois (FR)**
• **Chuberre, Nicolas**
**31820 Pibrac (FR)**

(74) Mandataire: **Hedarchet, Stéphane**
**COMPAGNIE FINANCIERE ALCATEL**
**Département Propriété Industrielle**
**54, rue La Boétie**
**75008 Paris (FR)**

Remarques:
Cette demande a été déposée le 07 - 08 - 2006 comme demande divisionnaire de la demande mentionnée sous le code INID 62.

(54) **Récepteur pour la gestion auto-adaptive de pertinence de contenus multimedia**

(57) L'invention concerne un récepteur (7) de gestion auto-adaptative de pertinence de contenus multimédia pour un récepteur de contenus multimédia au sein d'un réseau de télécommunications.

Selon l'invention, ce récepteur (7) est caractérisé en ce qu'il tient compte d'un profil dit long terme correspondant à un premier ensemble de pôles d'intérêt permanents de l'utilisateur du récepteur (7) et d'un profil dit court terme correspondant à un second ensemble de pôles d'intérêt temporaires de l'utilisateur.

# FIG_6

**Description**

La présente invention est relative au domaine de la gestion de contenus multimédia et concerne plus particulièrement un récepteur de contenus multimédia au sein d'un réseau de télécommunications.

Un tel récepteur tel qu'énoncé ci-dessus peut être relié à un réseau de diffusion radioélectrique assurant une diffusion d'informations collectives de contenus multimédia. Ce système est basé sur un réseau d'émetteurs terrestres ou sur des satellites de diffusion de type géostationnaires ou non, ou encore sur une combinaison de satellites de diffusion et de répéteurs terrestres.

On sait que la charge des réseaux de diffusion à haut débit se répartit dans la journée de manière très inégale.

Aux heures pleines, c'est à dire de forte charge sur le réseau, le réseau est saturé et n'offre qu'un débit limité par utilisateur, de sorte que les temps de réponse sont relativement longs.

Aux heures creuses, à savoir de faible charge pour le réseau, notamment en période nocturne de 0h à 8h, le réseau est très nettement sous-utilisé.

Ces disparités dans l'utilisation du réseau sont préjudiciables tant aux utilisateurs qu'à l'opérateur exploitant le réseau. Les utilisateurs consacrent un temps excessif pour parvenir à accéder aux données qu'ils souhaitent obtenir; de plus, ils paient un service qui n'atteint fréquemment pas la qualité souhaitée en termes de rapidité et de disponibilité en période diurne.

Pour accroître la qualité du service rendu en période diurne, les opérateurs installent des infrastructures de réseau à haute capacité qui se trouvent nettement sous-utilisées en période creuse, ce qui implique un manque à gagner significatif pour ces opérateurs.

Par ailleurs, on sait qu'une part significative des données qui intéressent les utilisateurs a trait à l'actualité sous différentes facettes, par exemple financière, économique, ou sportive.

Ce type d'information se compose d'éléments d'information qui concernent généralement un grand nombre d'utilisateurs et les problèmes de saturation du réseau proviennent du fait qu'une même information est envoyée plusieurs fois à destination d'utilisateurs différents, et ce généralement en période diurne, le plus souvent aux heures creuses.

Un lissage de la charge du réseau permettrait d'accroître la disponibilité de ce dernier en période de forte utilisation, sans nécessiter d'accroissement de sa capacité.

A cette fin, la Demanderesse a déposé une demande de brevet FR2809557 publiée le 30 novembre 2001.

Dans cette dernière demande, l'objet de l'invention est relatif à un procédé de diffusion d'éléments d'information multimédia à destination d'un récepteur, procédé dans lequel on tient compte du profil-type de l'utilisateur du récepteur à partir de ses pôles d'intérêt. Cependant, un seul type de profil est généré qui correspond à un profil élaboré à partir de pôles d'intérêt qu'on pourrait qualifier de permanents de l'utilisateur sur une période donnée.

L'invention vise donc à résoudre les problèmes identifiés ci-dessus.

L'invention se donne donc pour but de proposer un récepteur de contenus multimédia pour la gestion de pertinence de contenus multimédia, qui s'adapte de façon automatique aux pôles d'intérêt de l'utilisateur, quelles qu'en soient les évolutions, tout en évitant la nécessité d'une déclaration explicite des pôles d'intérêt de l'utilisateur, tâche très contraignante et même rédhibitoire dès lors que l'on s'adresse au grand public.

A cet effet, l'invention a pour objet un récepteur de contenus multimédia pour la gestion auto-adaptative de pertinence de contenus multimédia au sein d'un réseau de télécommunications, ce récepteur étant caractérisé en ce qu'il comporte des moyens de mémorisation d'un profil dit long terme dépendant d'un premier ensemble de pôles d'intérêt permanents de l'utilisateur du récepteur et des moyens de mémorisation d'un profil dit court terme dépendant d'un second ensemble de pôles d'intérêt temporaires de l'utilisateur.

Ainsi, selon l'invention, l'utilisateur est caractérisé par un premier ensemble de pôles d'intérêt permanents, latents, qui évoluent peu au cours de l'année, et par un ensemble de pôles d'intérêt momentanés, liés par exemple à sa localisation courante, à ses activités, à l'actualité du moment, à des événements récents ; face à ces 2 types de pôles d'intérêt, le procédé de l'invention vise à mettre à disposition de l'utilisateur des contenus qui satisfont les deux types de pôles d'intérêt. Outre la prise en compte de pôles d'intérêt permanents dans la gestion des contenus, le mécanisme basé sur le profil court terme complète cette gestion en prenant en compte l'évolutivité des pôles d'intérêt de l'utilisateur.

En outre, le récepteur de la demande de brevet n° FR 00 06 691 mentionnée ci-dessus, bien que judicieux dans l'approche inventive qu'il apporte, conduit à l'établissement d'"oeillères", préjudiciables à la qualité du service fourni. En effet, plus l'apprentissage du profil utilisateur est avancé, plus s'accentue l'effet de rejet des domaines qui ne correspondent pas à ses préoccupations habituelles.

En vue de résoudre ce précédent problème, selon un mode de réalisation de l'invention, le récepteur selon l'invention comporte des moyens de gestion prioritaire de contenus reçus identifiés tels quels.

Ainsi, la diffusion de contenus identifiés comme prioritaires permet de contourner la barrière naturelle mise en place par les mécanismes de filtrage établis par identification du profil utilisateur. En matière de diffusion d'actualité, il s'agit essentiellement des contenus qui figurent à la une des quotidiens.

Selon un mode de réalisation, un profil dit générique étant préalablement défini pour un utilisateur du récepteur, le profil long terme est déduit du profil générique pour traduire les mêmes variations que ce dernier, cette tendance étant déterminée sur une période beaucoup plus longue que celle utilisée pour le profil générique.

Selon un mode de réalisation, chaque contenu étant classé selon des catégories en arborescence allant du général au particulier grâce à un pointeur identifiant la branche auquel appartient le contenu, chaque branche étant affectée d'un poids $wG_{i.j.k}$ représentant le degré d'intérêt que porte l'utilisateur pour ladite branche, la variation de poids $\Delta wG_{i.j.k}$ étant définie selon la relation :

$$\Delta wG_{i.j.k} \;=\; wG_{i.j.k} \;-\; wG_{i.j.k}^{-1} \,,$$

G pour générique, i.j.k désignant la branche à laquelle le contenu est rattaché,
$wG_{i.j.k}^{-1}$ représentant la valeur de $wG_{i.j.k}$ en fin du cycle précédent,
le poids $w_{i.j.k}$ de la branche i.j.k pour le profil long terme est déduit du poids de cette branche au cycle précédent $w_{i.j.k}^{-1}$ en utilisant la formule :

$$wL_{i.j.k} \;=\; wL_{i.j.k}^{-1} \;+\; \alpha \,.\, \Delta wG_{i.j.k}$$

$\alpha$ étant une constante nettement inférieure à 1, permettant d'établir une progression beaucoup plus lente du poids pour le profil long terme et donc une variation suivant la même tendance pour le profil long terme par rapport à celle du profil générique GUP selon la relation :

$$LTUP = LTUP^{-1} \;+\; \alpha \,.\, \Delta GUP,$$

où LTUP = Long Term User Profile et GUP = Generic User Profile.

Selon un mode de réalisation, le profil court terme de valeur STUP est déduit du profil générique et du profil long terme par la formule suivante :

$$STUP = pos( \, GUP - LTUP \, ),$$

où pos() = valeur de l'argument si l'argument est positif, sinon 0.

Selon un mode de réalisation, la capacité mémoire disponible pour la mémoire cache étant divisée en trois parties de mémoire, respectivement une partie associée au profil long terme, une partie associée au profil court terme et une partie destinée au stockage de contenus prioritaires, la part de mémoire cache $C_{i.j.k}$ dévolue à chaque branche i.j.k de l'arborescence est déduite, pour chaque partie, du poids relatif $w_{i.j.k}$ de la branche, suivant la formule :

$$C_{i.j.k} \;=\; ( \, w_{i.j.k} \;/\; \Sigma \, w_{i.j.k} \, ) \,.\, C_{totale}$$

$C_{totale}$ représentant la capacité totale de mémoire pour chaque partie.

Selon un mode de réalisation, une étape d'évaluation d'un score de pertinence de chaque contenu est réalisé, ce score étant évalué en fonction d'une estimation de pertinence provenant du fournisseur de contenus et en fonction du profil d'utilisateur.

Selon un mode de réalisation, le score de chaque contenu reçu est égal au produit du poids de la branche auquel appartient le contenu avec la pertinence (pert) de ce contenu.

Selon un mode de réalisation, ladite pertinence varie dans une plage de valeurs de 0.1 à 10, étant entendu que la valeur d'une information standard est égale à 1, et qu'une information marginale va tendre vers la limite inférieure 0.1 alors qu'une information importante tendra vers la valeur 10.

Selon un mode de réalisation, un vecteur de description de chaque contenu étant préalablement diffusé vers le récepteur avant diffusion du contenu associé, ce vecteur comportant un identificateur de contenu et la durée du contenu, une table respectivement associée au profil long terme, au profil court terme et aux contenus prioritaires est créée puis mis à jour, détaillant par score décroissant chaque identificateur, son score et sa durée associées.

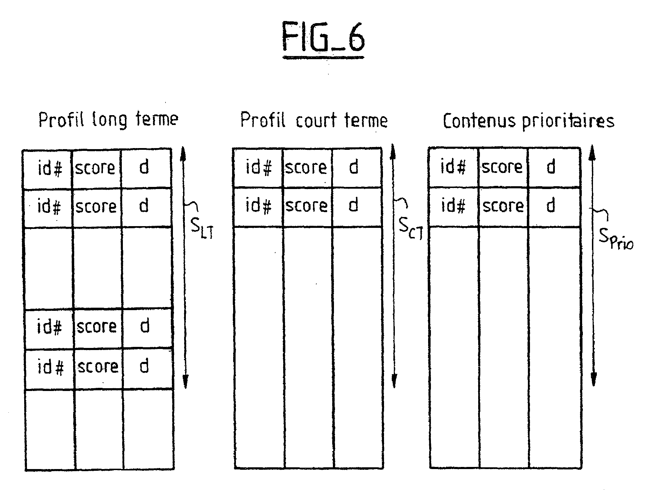

On soulignera ici qu'il a été pris comme hypothèse que les contenus reçus sont à taux de compression fixes donc la considération de leur durée est proportionnelle à celle de leur capacité. Tel ne serait bien entendu pas le cas si les taux de compression sont différents d'un contenu à un autre (on sait par exemple qu'un contenu musical est compressé selon un facteur de 64 kbits/s ou 128 kbits/s alors qu'un contenu d'information l'est à 32 kbis/s). Dans ce dernier cas, la description notamment de la figure 6 doit être modifiée en ce que c'est bien une liste de contenus que l'on doit sélectionner telle que la somme des capacités nécessaire au stockage dans chaque partition de cache n'excède pas la capacité réservée pour chacune des 3 partitions; la notion de durée n'intervient normalement plus que pour la présentation.

Selon un mode de réalisation, sur réception de chaque contenu, une étape de vérification de la présence de l'identificateur associé dans l'une des trois tables est réalisée, un résultat positif entraînant la mémorisation du contenu dans la partie mémoire correspondant à la table où la présence de l'identificateur a été détectée.

Selon un mode de réalisation, le remplissage desdites parties de mémoire associées respectivement au profil long terme et au profil court terme s'effectue par ordre décroissant de score de contenus jusqu'à saturation respective des parties.

Selon un mode de réalisation, on élimine les redondances de sélection entre la part de mémoire long terme et la part de mémoire court terme par élimination de contenu présentant le score le plus faible.

Selon un mode de réalisation, une étape d'apprentissage du profil générique GUP est entreprise à l'initialisation du récepteur sur la base du profil diffuseur, représentatif du degré d'intérêt de l'auditeur moyen pour chaque domaine d'information, à partir des premiers contenus reçus et de la variation de poids opérée sur la branche à laquelle appartient chacun de ces contenus, cette variation étant fonction des commandes de l'utilisateur sur le récepteur et du délai au bout duquel le commandes ont été exécutées.

Dans la présente demande, on appellera tT la durée d'accès au contenu, mesurée si le contenu est "streamable" c'est à dire déroulable au fil de l'eau (audio, vidéo), évaluée sinon (texte, page web), comme étant alors la durée de consultation moyenne pour un auditeur moyen. On utilisera par la suite cette notion de tT.

Selon un mode de réalisation, un jeu de valeurs temporelles de référence est établi à partir de la durée typique d'accès tT, afin de pouvoir appliquer le principe d'interprétation du comportement de l'apprentissage défini ci-après, dont la finalité est la caractérisation des pôles d'intérêt de l'utilisateur, ou du groupe d'utilisateurs partageant l'équipement d'accès. Ce groupe d'utilisateurs peut être une famille, une classe scolaire, etc.

Selon un mode de réalisation, ces valeurs de référence temporelle sont établies au pro-rata de la valeur typique tT associée au contenu considéré par rapport à une valeur établie représentative d'un contenu de durée moyenne, certaines valeurs (notamment tA par la suite) pouvant être établies de manière invariante, permettant d'interpréter des aspects du comportement qui ne sont pas dépendantes de la durée totale d'accès au contenu pour un utilisateur moyen.

Selon un mode de réalisation, une consultation d'un contenu donné d'une durée en-deçà d'une première valeur ($t_D$) entraîne une variation négative du poids attaché à cette branche et une consultation au-delà de cette première valeur entraine une variation positive du poids de celle-ci.

Selon un mode de réalisation, une consultation du contenu d'une durée supérieure à une seconde valeur supérieure à la première valeur n'entraîne aucune modification de poids de ladite branche.

Selon un mode de réalisation, au moins les première et seconde valeurs sont corrigées de manière auto-adaptative en fonction du comportement effectif de l'utilisateur lors du cycle de consultation.

Selon un mode de réalisation, l'archivage d'un contenu reçu par le récepteur dans un délai inférieur à une troisième valeur n'entraîne aucune variation de poids de la branche à laquelle appartient le contenu alors que l'archivage de ce contenu dans un délai supérieur à cette troisième valeur entraîne une variation de poids positive.

Dans un mode de réalisation particulier, le profil type est récupéré par le récepteur dans le flux de données reçu, le profil d'initialisation étant alors diffusé de manière cyclique à l'intention des récepteurs qui sont exploités pour la première fois sur le canal de diffusion considéré.

L'invention a également pour objet un récepteur de contenus multimédia au sein d'un réseau de télécommunications, caractérisé en ce qu'il met en oeuvre le procédé selon l'invention.

Dans le but de mieux faire comprendre l'invention, on va en décrire maintenant plusieurs modes de mise en oeuvre donnés à titre d'exemples non limitatifs de la portée de l'invention, en référence aux dessins annexés dans lesquels :

- la figure 1 est une vue schématique d'un système permettant la diffusion et la réception de contenus conformément à l'invention,
- la figure 2 est un organigramme représentant les différentes étapes de cheminement des contenus selon l'invention,
- les figures 3, 4 et 5 représentent une arborescence de classification de contenus, à différentes étapes du processus d'apprentissage du profil d'utilisateur,
- la figure 6 représente trois tables de vecteurs de description de contenus triés par niveau d'intérêt décroissant, chaque table correspondant respectivement aux contenus retenus pour le profil long terme, le court terme, et les contenus prioritaires.

- la figure 7 représente une interface utilisateur d'un récepteur selon l'ijnvention
- la figure 8 illustre un mode de réalisation d'un récepteur selon l'invention,
- la figure 9 représente les variations de poids d'une branche à laquelle appartient un contenu donné selon le temps de consultation de ce contenu par l'utilisateur,
- Sur la figure 10 est illustrée l'incrémentation du poids associé au contenu en question suite à une sélection du bouton "droite",
- Sur la figure 11 est illustrée l'incrémentation du poids associé au contenu en question suite à une sélection du bouton "enregistrement" ou "plus de renseignements".

En premier lieu, concernant le profil d'utilisateur compris dans le récepteur, on peut prévoir que le récepteur comporte initialement un profil type à partir duquel il réalise les premières sélections de contenus pour les proposer à l'utilisateur local.

Par exemple, certains profils peuvent être orientés vers des informations à caractère sportif et économique, sans que les critères de sélection ne soient spécifiés en ce qui concerne des niveaux de détail plus fins de ces deux domaines.

Dans un mode de réalisation particulier, le profil type est chargé dans le récepteur au moyen d'un dispositif amovible, de type carte magnétique, carte à puce ou tout moyen similaire de stockage permanent.

Un tel dispositif amovible utilisé pour le chargement du profil type peut incorporer des données de type :

- droit d'accès au réseau,
- droit d'accès à la source de diffusion,
- droits d'archivage définitif ou temporaire en fonction de la nature des éléments d'information,
- informations relatives à la durée et à l'étendue de ces droits d'accès et d'archivage local,
- clés de chiffrement / déchiffrement pour les échanges d'information avec la source de diffusion,
- profils disponibles en cas de multiplicité de profils type.

il est rappelé ci-dessous le principe du procédé de diffusion et de gestion de contenus multimédia tel qu'exposé dans la demande de brevet n° FR 00 06 691 déposée par la Demanderesse et sur laquelle se fonde en partie la présente demande.

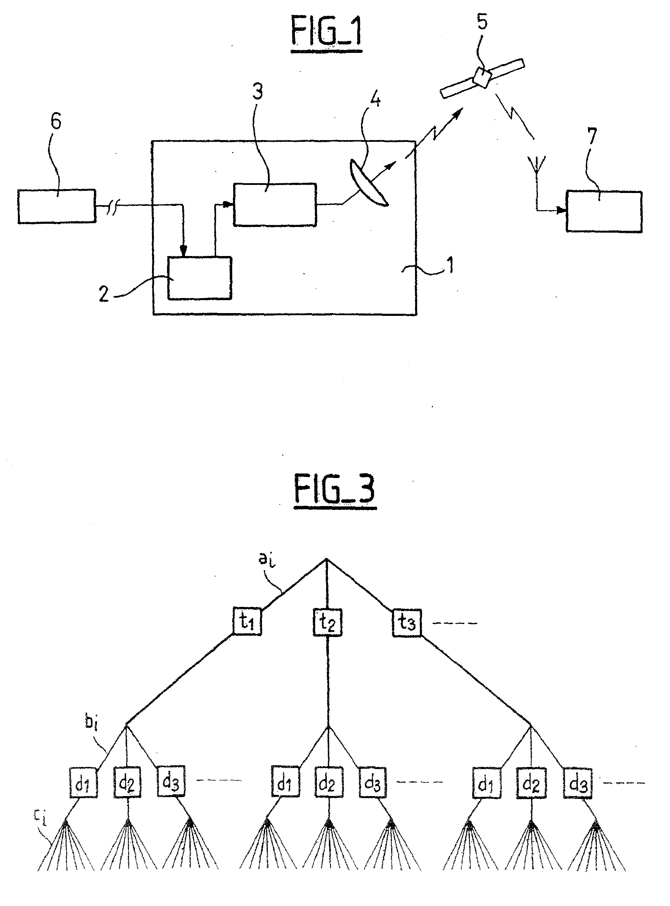

Le récepteur est intégré dans un système tel que représenté à la figure 1. Ce système comprend une infrastructure matérielle constituée par une «gateway» 1, c'est-à-dire un ensemble comprenant un serveur de diffusion 2, une chaîne de transmission 3 et une antenne 4. L'infrastructure comporte également un satellite ou une constellation de satellites 5 aptes à répercuter les signaux reçus de la station émettrice vers différents récepteurs 7 répartis dans une région donnée ou sur la totalité de la planète. Les récepteurs 7 sont présents en un nombre illimité en différents points de la région couverte par les satellites. Un seul récepteur 7 a été représenté à la figure 1. On notera que la liaison entre la gateway et le récepteur ne doit pas nécessairement passer par le satellite, et peut se faire uniquement par des relais terrrestres non représentés.

Le traitement des contenus d'information par ce système est le suivant.

Initialement, les contenus sont produits par des unités de production 6.

Pour faciliter la compréhension, la suite de la description sera basée sur des contenus constituant des programmes radiophoniques, ci-après désignés «émissions».

Les émissions sont classées par les unités de production, puis sont stockées dans le serveur de diffusion 2, qui les transmet aux satellites 5 aux moments de meilleure disponibilité du réseau.

Il est aisé de comprendre qu'il existe des périodes de moindre utilisation du réseau, notamment entre 0 et 8 heures du matin.

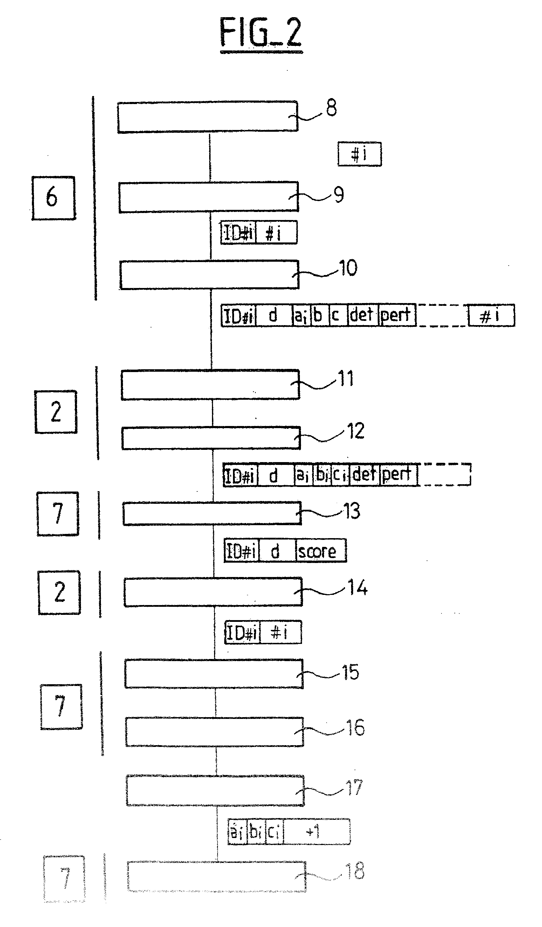

De façon plus détaillée, le traitement des contenus est illustré à la figure 2, où chaque bloc, référencé 8 à 18, correspond aux étapes suivantes.

Etapes 8, 9 : Les unités de production réalisent des émissions [#i] auxquelles sont attribués des identificateurs [ID#i]. Chaque émission ou contenu est segmenté en un certain nombre de blocs élémentaires pour l'adaptation à la couche de transport.

Etape 10 : Pour chaque émission, un vecteur de description de l'émission est généré. Ce vecteur de description comporte des paramètres qui sont utilisés pour optimiser l'exploitation des ressources de transmission du système et pour filtrer les contenus les plus pertinents au niveau du récepteur.

Ce vecteur comprend notamment :

- l'identificateur du contenu (l'émission) [ID#i],

- la durée [d] de l'émission (pour les contenus audio et vidéo),
- une indication du classement de l'émission [$a_i$, $b_i$, $c_i$] ; l'arborescence de classification peut être par exemple une arborescence DDC ("Dewey Decimal Classification" en anglais) utlisée par la bibliothèque du congrès américain couvrant tous les domaines du savoir. D'autres modèles sont bien entendu prévus qui sont plus appropriés à l'identification de contenus multimedia.
- le niveau de détail [det] représentatif du détail de traitement de l'information,
- une note de pertinence [pert] du classement de l'émission,
- l'étendue de l'audience attendue : zone géographique, groupe multicast, etc,
- la priorité associée au contenu: urgente, retard garanti, aussitôt que possible, etc,
- qualité de livraison de contenu : très importante, importante, qualité dite "best normal", qualité du mieux possible ("best effort" en anglais),
- la taille du contenu,
- le type de contenu et le type d'encodage (standards tels que window, real time players) : parole, audio, texte, données, video de basse qualité, video de haute qualité,
- le language : le système S-DMB couvrira en l'occurrence toute l'Europe,
- le type de chiffrement : contenu librede chiffrement ou chiffré,
- le seuil de tolérance : pourcentage d'erreurs tolérées pour le fonctionnement acceptable,
- la date d'expiration du contenu,
- une indication de droits de propriété intellectuelle ou copyright,
- la propriété/l'origine de ce contenu

etc.

- et enfin, est généré l'élément de programme [#i] proprement dit.

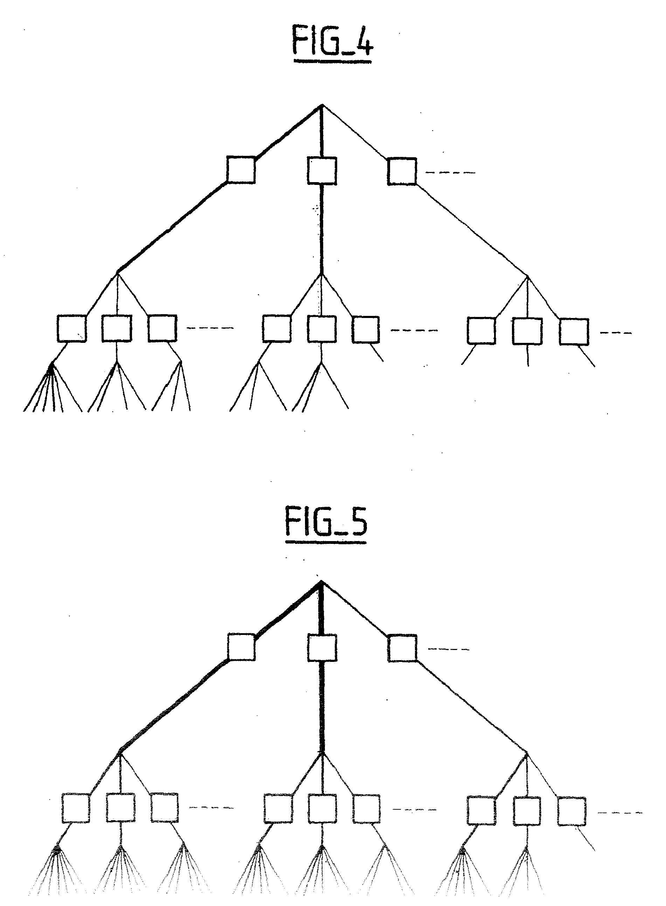

Le classement de l'émission, dans l'exemple décrit, consiste à la positionner dans une arborescence telle que celle représentée aux figures 3, 4 et 5.

Dans l'exemple considéré, la structure de classement utilisée comprend trois niveaux d'arborescence.

A la racine, l'arborescence réunit tous les types de programmes susceptibles de constituer des émissions radiophoniques.

Sur la figure 3, on a représenté trois branches correspondant à ce premier niveau d'arborescence. Chaque branche, référencée $t_1$, $t_2$, $t_3$, correspond à un type de programme particulier, par exemple : émissions d'informations, émissions culturelles, programme musical.

Au deuxième niveau d'arborescence, chaque type de programme $t_1$, $t_2$, $t_3$, est divisé en domaines dont trois, $d_1$, $d_2$, $d_3$, ont été ici représentés.

Dans le type de programmes des émissions d'information, trois domaines peuvent être considérés par exemple : information politiques, informations sportives, informations culturelles.

Chaque domaine d'informations se subdivise à son tour en secteurs, ce qui constitue un troisième niveau d'arborescence.

Comme on le voit à la figure 2, le classement d'une émission par son positionnement au sein de la structure de classification s'exprime en l'occurrence par un pointeur constitué par trois références $a_i$, $b_i$, $c_i$, dont chacune correspond à un niveau d'arborescence.

Pour donner un exemple détaillé, un élément d'actualité d'environnement de type national peut être représenté par le vecteur (2,5,4,9) dans lequel la composante 2 représente la classe (ou catégorie) d'actualité, la composante 5 représente la politique qui est le rang de la politique dans les branches de premier niveau, 4 représente le rang des actualités de politique nationale dans les branches de second niveau et 9 le rang des actualités de politique nationale relatives à l'environnement dans les branches de troisième niveau. Bien entendu, dans un souci de concision, il n'a été mentionné dans le vecteur de description uniquement les coordonnées dans l'arborescence. Comme on l'a vu ci-dessus, le vecteur de description comporte d'autres informations.

On comprend aussi qu'un contenu d'information peut être classé dans d'autres rubriques et peut donc être affecté d'un autre vecteur par exemple (2,6,2).

Au classement au sein de la structure sont associés l'indication de niveau de détail représentatif du degré de détail avec lequel l'information dans le contenu est traitée, par exemple 1 pour présentation sommaire à 3 pour analyse très détaillée, et la note de pertinence, qualifiant l'intérêt accordé à ce contenu au sein de la classe considérée. Comme on le verra dans la suite, cette note de pertinence fournie par l'unité de production (typiquement un journaliste) peut être de valeur comprise entre 0,1 et 10. Cette note quantifie l'intérêt conçu par le diffuseur de contenu d'information pour la population s'intéressant à la branche considérée. Ainsi la note de pertinence pour le même contenu d'information affecté de plusieurs vecteurs peut être différente d'un vecteur à un autre.

Etape 11 : Tous les programmes ainsi générés avec leurs vecteurs de description sont stockés dans la «gateway» 1 pour diffusion par le réseau de satellites 5.

Etape 12 : Seuls les vecteurs de description définis ci-dessus sont diffusés. Les vecteurs de description permettent de préciser les caractéristiques des contenus qui vont être diffusés.

Etape 13 : Chaque récepteur ou terminal utilisateur réceptionne les vecteurs de description et extrait une donnée statistique représentative du nombre et de la durée des accès déjà opérés par l'utilisateur sur la classe considérée. Il utilise pour cela le pointeur $[a_i, b_i, c_i]$ fourni par le vecteur de description, pointeur utilisé pour accéder à la table statistique construite par le récepteur. Cette table peut ne pas présenter les trois niveaux pour la branche considérée, ce qui est le cas notamment pour les branches peu exploitées par l'utilisateur ou en début d'apprentissage, lors des premières exploitations du dispositif par l'utilisateur; l'évaluation repose alors sur les statistiques d'accès de niveau inférieur $[a_i, b_i]$, voire $[a_i]$, pondéré par l'écart de niveau d'arborescence.

Il en résulte une évaluation du contenu, constituée de plusieurs valeurs statistiques en cas de vecteur de description multiple (cas où plusieurs classes sont concernées) ; dans ce cas, la valeur statistique retenue est la valeur la plus élevée, une fois pondérée par la note de pertinence. La valeur statistique pondérée résultante est qualifiée de score du contenu.

Chaque score est représentatif de l'intérêt que l'utilisateur est susceptible de porter à l'émission portant ce contenu, et ce en fonction de son profil d'utilisateur.

Le processus d'évaluation des contenus consiste en conséquence à prendre en compte le poids du contenu, fonction de la branche à laquelle appartient le contenu (identifiée dans le vecteur de description), le poids pouvant être fourni par une table de correspondance poids - adresse du contenu dans l'arborescence, et le facteur ou note de pertinence du contenu, précisé au sein du vecteur de description (entre 0.1 et 10, avec comme valeur standard 1). Le score est obtenu par la formule :

$$\text{score de pertinence du contenu} = w_{i.j.k} \cdot \text{pertinence du contenu}, w_{i.j.k}$$

représentant le poids de ce contenu.

Le filtrage des contenus en fonction de leur score respectif sera détaillé dans la suite.

Les vecteurs de description sont ensuite triés par score décroissant, ainsi que représenté par la figure 6.

Un seuil $S_{LT}$, $S_{CT}$ et $S_{Prio}$ est déterminé dans le récepteur, exprimant la capacité de stockage réservée dans le récepteur pour les émissions reçues et concernant chacune des listes "Porofil Long terme", "Profil Court terme" et "Contenus Prioritaires".

Dans la table de la figure 6, pour chaque table, on additionne les durées des différentes émissions triées par score décroissant.

La sélection des émissions consiste à retenir, par ordre de score décroissant, celles dont la somme des durées s'inscrit dans la capacité de stockage, telle que définie par le seuil S.

Une fois que la liste L des émissions à retenir est établie, le récepteur est prêt à recevoir les émissions.

La réception ultérieure de vecteurs de description, par exemple associés à des contenus d'information récents (actualité), est prise en compte en suivant le même processus, les contenus éventuellement déjà stockés étant écrasés par des contenus présentant un score plus élevé.

Etape 14 : La diffusion des émissions s'effectue globalement à destination de tous les récepteurs. Le réseau de satellites 5 diffuse, dans toute la zone de couverture, chacune des émissions produites par les unités de production.

Etape 15 : Chaque récepteur stocke localement les émissions dont il a préalablement sélectionné les vecteurs de description.

Etape 16 : A la fin de la diffusion de toutes les émissions, chaque récepteur contient un programme personnalisé déterminé par son profil d'utilisateur. Afin d'assurer une certaine cohérence à la présentation des contenus à l'utilisateur, le séquencement des émissions pour la phase de consultation est opéré en fonction de critères qui peuvent être définis par les unités de production ou par l'utilisateur en fonction de ses préférences : simplement par domaine et par score décroissant au sein du domaine considéré.

Etape 17 : L'utilisateur peut alors consulter les émissions mémorisées localement dans le récepteur. Chaque émission est présentée à l'utilisateur par l'intermédiaire d'une interface adaptée décrite dans la suite, permettant de passer d'une émission à une autre et de sélectionner celle désirée pour son exécution.

Par conséquent, selon l'esprit de ce qui a été exposé ci-dessus, plus le score de pertinence associé à un contenu reçu est élevé, plus il y a intérêt à sauvegarder ce contenu dans la mémoire cache du récepteur. En revanche un contenu avec un faible score sera plus facilement supprimé car le risque qu'il intéresse l'utilisateur sera faible.

On comprend donc aisément que la gestion des contenus au sein du récepteur s'articule autour du profil de l'utilisateur du récepteur.

Le profil utilisateur, notion déjà exploitée dans la demande antérieure n° FR 00 06 691 mentionnée ci-dessus, peut être identifiée comme un profil générique ou GUP (pour "Generic User Profile" en anglais) cyclique.

Ce profil est géré suivant des cycles, typiquement des cycles de 24 heures.

De cycle en cycle, un profil dit long terme est directement déduit du GUP en suivant un processus d'intégration : si l'on appelle $wG_{i.j.k}$ le poids de la branche i.j.k, $\Delta wG_{i.j.k}$ représente la variation de $wG_{i.j.k}$ au cours du cycle considéré ; cette variation peut être positive ou négative, en fonction de l'évolution de l'intérêt de l'utilisateur pour les contenus appartenant à cette branche, vis à vis des autres branches :

$$\Delta wG_{i.j.k} \;=\; wG_{i.j.k} \;-\; wG_{i.j.k}^{-1} \,,$$

$wG_{i.j.k}^{-1}$ représentant la valeur de $wG_{i.j.k}$ en fin du cycle précédent.

A l'issue du cycle courant, le poids $w_{i.j.k}$ de la branche i.j.k pour le profil long terme est déduit du poids de cette branche au cycle précédent $w_{i.j.k}^{-1}$ en utilisant la formule :

$$wL_{i.j.k} \;=\; wL_{i.j.k}^{-1} \;+\; \alpha \,.\, \Delta wG_{i.j.k}$$

$\alpha$ étant une constante nettement inférieure à 1, qui permet d'établir une progression très lente du profil long terme, beaucoup plus lente que le profil générique GUP. En forme abrégée et en faisant intervenir le profil long terme, cette relation donne :

$$LTUP = LTUP^{-1} \;+\; \alpha \,.\, \Delta GUP,$$

où

$$LTUP = \text{Long Term User Profile.}$$

Le profil long terme suit donc exactement les mêmes variations que le profil générique, de cycle en cycle, mais d'une manière ralentie : l'incrément (ou décrément) appliqué est une valeur réduite de l'incrément (ou décrément) caractérisant la variation du profil générique, branche par branche.

Concernant le profil court terme, celui-ci est déduit du profil générique et du profil long terme par la formule suivante :

$$STUP = pos( GUP - LTUP ),$$

où STUP = Short Term User Profile (version anglaise de profil court terme) pos() = valeur de l'argument si l'argument est positif, sinon 0.

Par conséquent, si, à l'issue du cycle précédent, l'intérêt courant pour la branche considérée est plus faible que l'intérêt moyen (établi au travers du profil long terme), la branche a un poids nul, c'est à dire qu'aucun contenu ne sera stocké dans la mémoire cache du récepteur à court terme pour cette branche.

Dans le cas contraire, plus la différence est importante entre l'intérêt courant et l'intérêt moyen pour les contenus appartenant à la branche considérée, plus la part de mémoire cache dévolue à cette branche est importante.

Ce mécanisme permet de satisfaire les pôles d'intérêt localisés, et de suivre parfaitement les évolutions de l'utilisateur.

L'utilisation des profils long terme et court terme est réalisée de la manière suivante :

La capacité mémoire disponible pour la mémoire cache est divisée en trois parties, non nécessairement égales :

- une partie associée au profil long terme
- une partie associée au profil court terme
- une partie destinée au stockage de contenus prioritaires explicités ci-après.

La part de mémoire cache dévolue à chaque branche de l'arborescence est déduite du poids relatif de la branche, suivant la formule :

$$C_{i.j.k} \; = \; ( \; W_{i.j.k} \; / \; \Sigma \, W_{i.j.k} \; ) \; . \; C_{totale}$$

Ainsi, la capacité de la branche i.j.k est calculée à partir de la capacité totale disponible au prorata du poids cette branche vis à vis de la somme de tous les poids.

Cette formule s'applique à l'identique pour la mémoire cache long terme et celle court terme ; plus le poids de la branche est élevé, plus la part de mémoire cache utilisée pour cette branche est importante.

En complément de cet aménagement, on récupère les reliquats de cache non utilisés pour stocker les contenus restants, classés par score décroissant.

Nous abordons désormais la gestion des contenus prioritaires permettant de résoudre l'une des problématiques importantes de la présente demande, comme exposé ci-dessus.

Tel que nous l'avons évoqué, la troisième partition cache est réservée aux contenus prioritaires. Ces contenus diffèrent des autres contenus par un indicateur ou drapeau figurant dans le descripteur signalant que ce contenu est prioritaire ; cet indicateur est saisi manuellement, afin de distinguer les contenus les plus importants. Ce type de contenus prioritaires sont ceux comportant par exemple des scoops, des nouvelles exclusives ou très importantes, etc.

Le filtrage des contenus a été exposé ci-dessus. Celui-ci s'articule autour du score de chaque contenu reçu étant égal au produit du poids $w_{i.j.k}$ de la branche auquel appartient le contenu avec la pertinence de ce contenu estimée par le fournisseur de contenus. Cette pertinence peut varier de 0.1 à 10, étant entendu que la valeur standard d'une information est égale à 1, et qu'une information marginale va tendre vers la limite inférieure 0.1 alors que le scoop tendra ves la valeur 10.

Une liste par score décroissant est établie séparément pour les trois cas suivants, comme on l'a constaté sur la figure 6 : sur la base du profil long terme, sur la base du profil court terme, et dans le cas des profils prioritaires en utilisant simplement une liste par pertinence décroissante (le profil utilisateur n'ayant pas de rôle pour la classification des contenus prioritaires).

Une fois ces 3 listes par score décroissant constituées, chaque liste est parcourue et le test suivant est réalisé, contenu par contenu :

- si la place restante dans la part de cache dévolue à la branche permet de stocker le contenu (la capacité nécessaire au stockage figure dans le descripteur), le contenu est retenu en vue de le stocker dans le reliquat de capacité disponible pour la branche considérée,
- si le contenu excède la place restante mais que le score du contenu considéré excède les scores de contenus déjà stockés au sein de la même branche, tel que le cumul des capacités utilisées pour le stockage des contenus et le reliquat de capacité de la branche considérée excède la capacité nécessaire au stockage du nouvel élément, le contenu est retenu en vue de le substituer aux contenus entrant dans ce cumul de capacité,
- si le contenu ne satisfait aucun de ces critères, l'élément de contenu n'est pas retenu.

A l'issue de cette phase, on dispose de trois listes, précisant le numéro d'identification ID# de chacun des contenus retenus. Une dernière passe est effectuée pour allouer les reliquats de capacité aux contenus restants, toujours par score décroissant et séparément pour les 3 partitions (long terme, court terme, prioritaires). Les redondances de sélection entre partition long terme et partition court terme sont éliminées, par élimination de l'élément présentant le score le plus faible.

Ensuite, lorsque la diffusion a lieu, le terminal analyse contenu par contenu si le numéro d'identification présent dans l'entête fait partie de l'une des trois listes ; si c'est le cas , le contenu est stocké en cache.

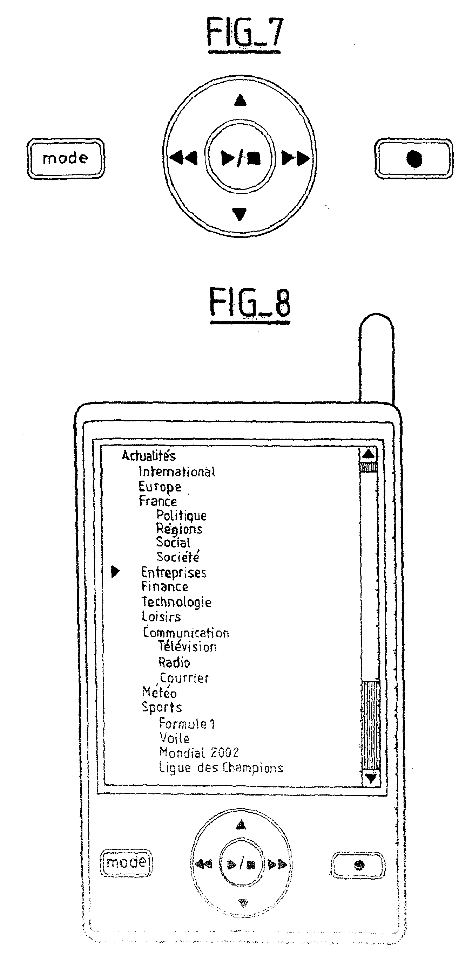

La figure 7 représente l'interface utilisateur 20 d'un récepteur 21 dont un mode de réalisation est illustré à la figure 8. Ce récepteur 21 peut être un terminal UMTS, un livre électronique ("ebook" en anglais), un assistant personnel numérique ou PDA (pour "Personal Digital Assistant" en anglais).

En mode d'accès automatique, c'est à dire consécutivement à la sélection de la touche Play), les contenus stockés en mémoire cache sont présentés spontanément en alternant les trois partitions (long terme, court terme, prioritaires) au prorata de la capacité dévolue à ces trois partitions, et en scrutant les éléments appartenant à une même branche dans les trois partitions afin d'éviter de mélanger les différents thèmes lors de la restitution.

On remarque, sur ces figures 7 et 8, la particularité de l'interface utilisateur :

- 4 touches de contrôle de déplacement : « haut » 22, « bas » 23, « droite » 24, « gauche » 25,
- une touche de validation 26, généralement située au milieu du dispositif de contrôle de déplacement,
- 2 touches annexes, utilisées en l'occurrence en tant que « mode » 27 et « store » 28 ;

Le démarrage de l'accès est initié par la touche de validation, à la manière d'une touche d'éxecution ou "Play".

Le passage au contenu suivant se fait avec la commande « droite » ; c'est l'équivalent de la commande "Next" dans le cadre de la demande de brevet antérieure de la Demanderesse ci-dessus mentionnée. Le poids de la branche à laquelle appartient le contenu consulté est diminué ou augmenté sur action sur cette touche, en fonction de l'instant d'activation, ce qui va être détaillé dans la suite.

Le passage à l'élément précédent se fait avec la commande « gauche », sans impact sur le profil.

Les commandes « haut » et « bas » permettent à l'utilisateur de parcourir le contenu affiché, sans impact sur le profil.

La commande annexe « store » provoque l'archivage du contenu considéré, si les droits de l'utilisateur lui permettent de le faire. Cette action produit l'accroissement du poids de la branche à laquelle appartient le contenu.

Un appui sur la touche de validation en cours de consultation produit le passage au niveau de détail supérieur pour le même contenu. Si ce contenu est disponible avec le niveau de détail requis au sein de la mémoire cache, il est immédiatement présenté, sinon une requête est transmise au serveur de diffusion afin de récupérer le contenu et de le présenter. On notera que la récupération de blocs manquants dans le contenu transmis fait l'objet d'une demande de brevet séparée déposée par la Demanderesse FR2840148 publiée le 28 novembre 2003. On pourra s'y reporter pour les différents types de récupération de blocs manquants décrits.

Lorsque l'appui sur la touche de validation est effectuée en cours de présentation, le poids de la branche à laquelle appartient le contenu est augmenté.

L'appui sur la touche « mode » permet de basculer du mode de consultation automatique au mode de consultation manuel, et vice-versa.

En mode manuel, l'arborescence de classification des contenus disponibles est présentée à l'utilisateur, ainsi que la liste des contenus accessibles, branche par branche, tel qu'on peut le percevoir sur la figure 8. Les touches de contrôle de déplacement « haut » et « bas » permettent de se déplacer de sous-branche en sous-branche au sein d'une même branche, la touche « gauche » permet de remonter d'un niveau dans l'arborescence, et réciproquement pour la touche « droite ».

Les autres commandes opèrent comme en mode automatique, dès lors que la touche de validation a été activée. L'apprentissage est donc effectué en suivant les mêmes règles qu'en mode d'accès automatique.

Concernant l'algorithme d'apprentissage du profil (que ce soit le profil long terme, court terme ou GUP), celui-ci est en relation directe avec la variation de poids opérée sur la branche à laquelle appartient le contenu consulté, fonction de la touche actionnée et de l'instant où cette touche est actionnée.

Le temps est compté à partir du début de la présentation du contenu à l'utilisateur ; bien entendu, ceci s'applique à toutes les formes de contenus : textes, pages web, audio, vidéo, ... .

Si le contenu a été rattaché à la source à plusieurs branches, la variation de poids est effectuée uniquement pour la branche pour laquelle le contenu a été retenu, c'est à dire dans la plupart des cas la branche pour laquelle le contenu a présenté le score le plus élevé. Dans une variante avantageuse, la variation de poids s'effectue sur toutes les branches auxquelles le contenu a été rattaché.

Le principe défini ci-après est basé sur une observation statistique ; cela signifie que les variations de poids effectuées sur un lot réduit de contenus ne sont pas significatives ; si, par contre, la tendance de l'utilisateur est d'écourter systématiquement la consultation de contenus appartenant à une même branche, l'intérêt de l'utilisateur pour ce domaine est faible et donc il est opportun de réduire la taille de cache dévolue à ce domaine.

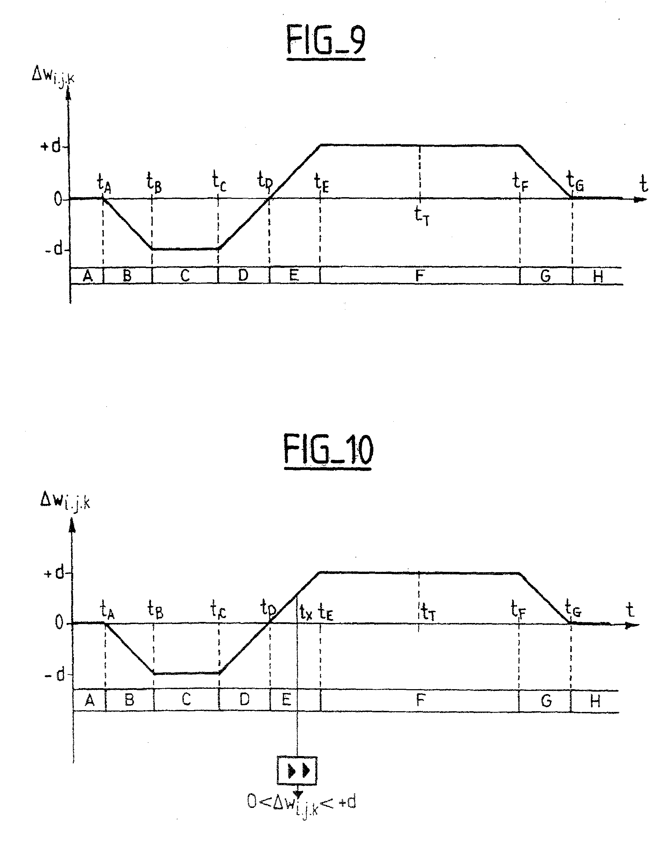

Afin de prendre en compte le comportement de l'utilisateur de la manière la plus précise possible, la variation de poids dépend de l'instant où l'action est effectuée . En ce qui concerne la touche droite (Next), une solution avantageuse consiste à exploiter le principe illustré par la figure 9.

La figure 9 représente les variations de poids d'une branche à laquelle appartient un contenu donné selon le temps de consultation de ce contenu par l'utilisateur,

Sur cette dernière figure, $t_T$ représente la durée moyenne de consultation du contenu ; cette durée est implicite dans le cas des contenus tels que l'audio ou la vidéo ; cette durée est évaluée à la source dans le cas des contenus de type texte ou pages web, comme étant le temps de lecture pour la page considérée pour un lecteur standard.

La valeur d représente une valeur d'incrément de référence qui peut être soit constant, soit dépendre de la touche activée, soit être calculé au pro-rata de la taille d'occupation en cache du contenu consulté (solution la plus avantageuse), soit être calculé au pro-rata du temps de consultation moyen $t_T$, soit dépendre du niveau de détail correspondant au contenu consulté ; une combinaison entre ces différentes méthodes de calcul est envisageable.

Les valeurs d'incrément +d et décrément -d peuvent être affectées de valeurs distinctes, afin de rendre par exemple plus rapide la mémorisation de profil vis à vis de l'oubli.

- de 0 à $t_A$ : $\Delta w_{i.j.k} = 0$

le délai entre la présentation du contenu et la réaction de l'utilisateur est trop court pour pouvoir considérer de manière fiable que le contenu ne présente aucun intérêt pour l'utilisateur ; l'action utilisateur est considérée comme non significative ; le poids $w_{i.j.k}$ est maintenu inchangé.

- de $t_A$ à $t_B$ : $\Delta w_{i.j.k} < 0$, décroissant

le délai entre la présentation du contenu et la réaction de l'utilisateur est suffisant pour pouvoir en déduire que le contenu intéresse très peu l'utilisateur ; la variation de poids, $\Delta w_{i.j.k}$, est négative ; elle atteint la valeur -d lorsque $t = t_B$

- de $t_B$ à $t_C$ : $\Delta w_{i.j.k} = -d$, valeur négative constante

sur cette plage, l'instant effectif d'activation de la touche n'est pas critique ; on peut considérer avec une forte probabilité que le contenu consulté présente moins d'intérêt que les autres contenus pour l'utilisateur ; la variation de poids, $\Delta w_{i.j.k}$, est négative, constante et égale à -d.

- de $t_C$ à $t_D$ : $\Delta w_{i.j.k} > 0$, croissant

l'action sur la touche devient de moins en moins significative sur l'intérêt réel de l'utilisateur pour le contenu présenté ; la variation de poids, $\Delta w_{i.j.k}$, est négative, mais croissante ; elle atteint 0 à $t = t_D$, signifiant qu'à cet instant on ne peut conclure de l'action utilisateur s'il s'intéresse ou non au contenu présenté ; on n'effectue donc pas de variation de poids pour la branche i.j.k à laquelle est rattachée le contenu.

- de $t_D$ à $t_E$ : $\Delta w_{i.j.k} >= 0$, croissant

statistiquement parlant, on acquiert de plus en plus la certitude que le contenu a intéressé l'utilisateur ; la variation $\Delta w_{i.j.k}$ est positive, croissante ; elle atteint +d à $t = t_E$.

- de $t_E$ à $t_F$ : $\Delta w_{i.j.k} = +d$, valeur positive constante

au delà du cap matérialisé par $t_E$, l'intérêt de l'utilisateur est à priori garanti, le temps de consultation étant voisin de la valeur standard $t_T$ , la durée de consultation effective pouvant être en deçà ou au delà du temps moyen $t_T$ ; la variation $\Delta w_{i.j.k}$ est constante, égale à +d.

- de $t_F$ à $t_G$ : $\Delta w_{i.j.k} > 0$, décroissant

le comportement de l'utilisateur devient de plus en plus ambigu, le temps de consultation excédant significativement le temps moyen $t_T$ ; typiquement, l'utilisateur a détourné son attention du contenu lors de l'accès, il y a de moins en moins lieu de tenir compte de cet accès pour l'apprentissage ; la variation $\Delta w_{i.j.k}$ devient de plus en plus faible, elle atteint 0 à $t = t_G$

- au delà de $t_G$ : $\Delta w_{i.j.k} = 0$, constant

l'accès n'a plus aucune signification en matière d'analyse du comportement ; l'utilisateur s'est probablement détourné du récepteur ; on ne peut pas conclure si le dernier contenu consulté a intéressé ou non l'utilisateur.

Sur la figure 10 est illustrée l'incrémentation du poids associé au contenu en question suite à une sélection du bouton "droite" : on presse la touche "Next" entre $t_D$ et $t_E$, l'incrément $\Delta w_{i.j.k}$ est positif, entre 0 et +d

Par ailleurs, une critique opportune vis à vis de ce principe de calcul du $\Delta w_{i.j.k}$ porte sur la grande variabilité du comportement des utilisateurs, notamment en matière de temps de lecture. Pour cette raison, une correction est considérée avantageusement, décrite ci-après. Cette correction peut être appliquée uniformément sur tous les contenus accédés, en fin de cycle de consultation, ou par domaine d'informations (identifiés par le ou les premiers niveaux de l'arborescence, i ou i.j), certains domaines pouvant requérir un temps d'accès plus long en fonction de l'aptitude de l'utilisateur à appréhender ce domaine.

Dans une variante avantageuse, $t_T$ (et par voie de conséquence, les valeurs $t_i$ associées) sont corrigées de manière auto-adaptative en fonction du comportement effectif de l'utilisateur lors du cycle de consultation : les valeurs

$t_X$ sont mémorisées pour chaque contenu au cours du cycle d'accès ; elles sont normalisées par le ratio entre leur valeur moyenne $t_{X\,moy}$ et la moyenne des valeurs de référence, $t_{T\,moy}$ :

$$t_{X\,corrigée} = (\,t_{T\,moy}\,/\,t_{X\,moy}\,)\,.\,t_X$$

les valeurs $t_X$ corrigée sont exploitées en lieu et place des valeurs $t_X$ pour l'obtention des variations de poids $\Delta w_{i.j.k}$. $t_X$ représente l'instant d'appui sur la touche, compté à partir du début de présentation de l'élément à l'utilisateur.

Le principe qui vient d'être défini concerne l'impact de l'appui sur la touche droite (Next).

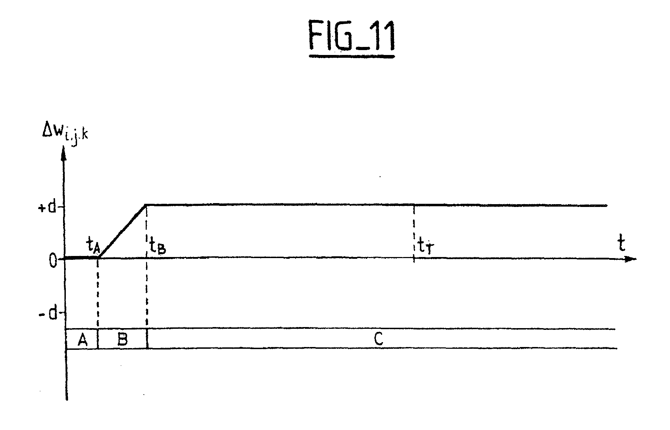

Un principe plus simple est défini pour les touches d'enregistrement de contenus "Store" et de renseignements "More Detail" (appui sur la touche centrale, i.e. touche de validation en cours de consultation), illustré sur la figure 11 :

- de 0 à $t_A$ : $\Delta w_{i.j.k} = 0$

le délai entre la présentation du contenu et la réaction de l'utilisateur est trop courte pour pouvoir considérer que l'utilisateur a eu un comportement significatif, le temps de consultation étant très inférieur à la valeur typique $t_T$; le poids $w_{i.j.k}$ est maintenu inchangé

- de $t_A$ à $t_B$ : $\Delta w_{i.j.k} > 0$, croissant

le délai entre la présentation du contenu et la réaction de l'utilisateur est suffisante pour pouvoir en déduire que le contenu intéresse l'utilisateur ; la variation de poids, $\Delta w_{i.j.k}$, est positive; elle atteint la valeur +d lorsque $t = t_B$

- au delà de $t_B$ : $\Delta w_{i.j.k} = +d$, valeur positive constante

à partir de $t_B$, on a la certitude que l'utilisateur a pris effectivement connaissance du contenu et qu'il a agi de manière consciente, choisissant suivant la touche activée d'archiver le contenu ou de vouloir accéder à un niveau de présentation du sujet traité plus détaillé ; au delà de $t_B$, l'instant d'appui n'importe plus, l'utilisateur ayant eu suffisamment le temps de prendre connaissance du sujet traité ; dans un mode de réalisation avantageux, l'incrément +d est accru lorsque le contenu sollicité par l'utilisateur n'est pas présent au niveau du cache local, soulignant, lorsque cette situation est matérialisée auprès de l'utilisateur (logo particulier, indicateur visuel) que l'utilisateur a lancé cette requête de contenu auprès d'un serveur distant alors qu'une telle requête prend un temps significativement plus élevé que pour les accès à des contenus présents au sein du cache local.

On va se préoccuper ici de l'accélération de l'apprentissage en début d'utilisation.

Dans un mode de réalisation avantageux, le profil utilisateur est normalisé de manière à introduire un mécanisme d'accélération de l'apprentissage en début d'utilisation.

Pour cela, la somme des branches du profil diffuseur, profil utilisé pour initialiser le profil utilisateur lors du tout premier accès, est établi à une valeur faible, par exemple 4000. D'après la demande de brevet antérieure mentionnée ci-dessus, le poids des branches inférieures est au plus égal au poids de ces branches supérieures.

A l'issue de chaque cycle d'accès, typiquement toutes les 24 heures, on recalcule la valeur de $\Sigma w_{i.j.k}$, représentant la somme des poids de toutes les branches de l'arborescence ; si $\Sigma w_{i.j.k} < 4000$, tous les poids des branches sont normalisés de manière à ce que $\Sigma w_{i.j.k} = 4000$ ;
si $\Sigma w_{i.j.k}$ se situe entre 4000 et une valeur plafond considérée typiquement à 32000, les poids sont laissés inchangés ;
si $\Sigma w_{i.j.k}$ excède 32000, tous les poids des branches sont normalisés de manière à ce que $\Sigma w_{i.j.k} = 32000$.

Pour un incrément d constant (ou évalué suivant un principe invariant au cours de l'utilisation), ce processus permet d'accélérer l'apprentissage en début d'utilisation ; en effet, l'impact d'une variation d est 8 fois plus important lorsque $\Sigma w_{i.j.k} = 4000$ que lorsque $\Sigma w_{i.j.k} = 32000$, pour la branche à laquelle cette variation est affectée.

Les valeurs 4000 et 32000 sont données à titre d'exemple. La valeur finale est nécessairement supérieure à la valeur d'origine.

Pour rappel, la partition de cache dévolue à une branche i.j.k est calculée au pro-rata de la capacité totale de cache réservée à cette application, en utilisant le facteur $w_{i.j.k}\,/\,\Delta w_{i.j.k}$.

Dans une alternative envisageable, le même comportement est obtenu sans processus de normalisation, mais par pondération de l'incrément d, pondération dégressive au cours de l'utilisation, de manière à réduire l'impact de l'action sur telle ou telle touche lorsque l'apprentissage est suffisamment avancé.

Un autre avantage de la solution présentée, opérée par normalisation de $\Sigma w_{i.j.k}$, porte sur l'aggrégation des profils utilisateurs : cette aggrégation, effectuée de manière à optimiser le processus de diffusion par exploitation des profils utilisateurs, remontés au niveau du serveur de diffusion par voie sécurisée et anonyme, est effectuée par simple sommation des profils de chacun des utilisateurs constituant l'audience du dispositif de diffusion, pour le canal de diffusion considéré. Avec les profils normalisés, sur l'exemple considéré, la contribution du profil d'un nouvel abonné a un impact 8 fois plus faible sur le profil global.

Dans le cas de la seconde solution, opérant par pondération décroissante de l'incrément d au cours de l'apprentissage, il est nécessaire de transmettre une indication sur l'ancienneté de l'utilisateur ou son degré d'avanacement dans le processus d'apprentissage, basé par exemple sur le nombre d'heures d'utilisation. C'est nettement moins précis et simple.

Les modes de mise en oeuvre décrits ci-dessus ne sont aucunement limitatifs. Ils sont fournis pour mieux faire comprendre l'invention, la portée de cette invention étant définie par les revendications annexées.

En particulier, le récepteur de l'invention peut être un ordinateur, portable ou non, relié au réseau mondial internet communément appelé Worldwide Web.

On notera que le vecteur de description sera transmis sur un canal faisant l'objet d'une très haute protection pour offrir la plus grande garantie d'acheminement aux utilisateurs.

La pertinence peut varier dans une plage différente que celle définie, avec une valeur différente pour les contenus standards.

**Revendications**

1.  Récepteur (7) de contenus multimédia pour la gestion auto-adaptative de pertinence de contenus multimédia au sein d'un réseau de télécommunications, un profil utilisateur dit générique (GUP) étant préalablement défini pour un utilisateur du récepteur (7), et chaque contenu étant classé selon des catégories en arborescence allant du général au particulier grâce à un pointeur (i.j.k) identifiant la branche (i.j.k) auquel appartient le contenu, chaque branche (i.j.k) étant affectée d'un poids $wG_{i.j.k}$ représentant le degré d'intérêt que porte l'utilisateur pour ladite branche (i.j.k), ce récepteur étant **caractérisé en ce qu'**il comporte des moyens de mémorisation d'un profil dit long terme correspondant à un premier ensemble de pôles d'intérêt permanents de l'utilisateur du récepteur (7) et des moyens de mémorisation d'un profil dit court terme correspondant à un second ensemble de pôles d'intérêt temporaires de l'utilisateur.

2.  Récepteur selon la revendication 1, **caractérisé en ce qu'**il comporte des moyens de gestion prioritaire de contenus reçus dits contenus prioritaires, ces contenus étant annexés d'un drapeau d'identification prioritaire.

3.  Récepteur selon la revendication 1 ou 2, **caractérisé en ce que** le profil long terme est déduit du profil générique (GUP) pour traduire les mêmes variations que ce dernier (GUP), cette tendance étant formulée sur une période beaucoup plus longue que celle du cycle du profil GUP.

4.  Récepteur selon l'une des revendications 1 à 3, **caractérisé en ce que** la variation de poids $\Delta wG_{i.j.k}$ étant définie selon la relation :

$$\Delta wG_{i.j.k} = wG_{i.j.k} - wG_{i.j.k}^{-1},$$

$wG_{i.j.k}^{-1}$ représentant la valeur de $wG_{i.j.k}$ en fin du cycle précédent,
le poids $w_{i.j.k}$ de la branche (i.j.k) pour le profil long terme est déduit du poids de cette branche au cycle précédent $w_{i.j.k}^{-1}$ en utilisant la formule :

$$wL_{i.j.k} = wL_{i.j.k}^{-1} + \alpha \cdot \Delta wG_{i.j.k}$$

$\alpha$ étant une constante nettement inférieure à 1, permettant d'établir une progression beaucoup plus lente du poids pour le profil long terme et donc une variation suivant la même tendance pour le profil long terme par rapport à celle du profil générique GUP selon la relation :

$$LTUP = LTUP^{-1} + \alpha . \Delta GUP,$$

où

$$LTUP = \text{Long Term User Profile.}$$

**5.** Récepteur selon la revendication 4, **caractérisé en ce que** le profil court terme de valeur STUP est déduit du profil générique et du profil long terme par la formule suivante :

$$STUP = pos( GUP - LTUP ),$$

où pos() = valeur de l'argument si l'argument est positif, sinon 0.

**6.** Récepteur selon l'une des revendications 1 à 5, **caractérisé en ce que**, la capacité mémoire disponible pour une mémoire cache étant divisée en trois parties de mémoire, respectivement une partie associée au profil long terme, une partie associée au profil court terme et une partie destinée au stockage de contenus prioritaires, une part de mémoire cache ($C_{i.j.k}$) dévolue à chaque branche (i.j.k) de l'arborescence est déduite, pour chaque partie, du poids relatif ($w_{i.j.k}$) de la branche (i.j.k), suivant la formule :

$$C_{i.j.k} = ( w_{i.j.k} / \Sigma\, w_{i.j.k} ) . C_{totale}$$

$C_{totale}$ représentant la capacité totale de mémoire pour chaque partie.

**7.** Récepteur selon l'une des revendications 1 à 6, **caractérisé en ce qu'**il comporte des moyens d'évaluation d'un score de pertinence (score) de chaque contenu est réalisé, ce score étant évalué en fonction d'une estimation de pertinence (pert) provenant d'un fournisseur de contenus, et en fonction du profil d'utilisateur.

**8.** Récepteur selon la revendication 7, **caractérisé en ce que** le score de chaque contenu reçu est égal au produit du poids ($W_{i.j.k}$) de la branche (i.j.k) auquel appartient le contenu avec la pertinence (pert) de ce contenu.

**9.** Récepteur selon l'une des revendications 7 ou 8, **caractérisé en ce que** ladite pertinence varie dans une plage de valeurs de 0.1 à 10, étant entendu que la valeur d'un contenu standard est égale à 1, et qu'un contenu présentant un intérêt marginal va tendre vers la limite inférieure 0.1 alors qu'un contenu évalué comme présentant un intérêt primordial pour les utilisateurs intéressés par la branche considérée tendra vers la valeur 10.

**10.** Récepteur selon l'une des revendications 7 à 9, **caractérisé en ce qu'**un vecteur de description de chaque contenu étant préalablement diffusé vers le récepteur (7) avant diffusion du contenu associé, ce vecteur comportant un identificateur de contenu, la capacité de stockage nécessaire et la durée (d) du contenu, une table respectivement associée au profil long terme, au profil court terme et aux contenus prioritaires est créée puis mise à jour, détaillant par ordre décroissant chaque identificateur, son score, sa capacité nécessaire et sa durée associées.

**11.** Récepteur selon la revendication 10, **caractérisé en ce qu'**il comporte, sur réception de chaque contenu, des moyens de vérification de la présence de l'identificateur associé dans l'une des trois tables, un résultat positif entraînant la mémorisation du contenu dans une partie mémoire correspondant à la table où la présence de l'identificateur a été détectée.

**12.** Récepteur selon la revendication 11, **caractérisé en ce que** le remplissage desdites parties de mémoire associées respectivement au profil long terme et au profil court terme s'effectue par ordre décroissant de score de contenus jusqu'à saturation respective des parties.

**13.** Récepteur selon la revendication 12, **caractérisé en ce qu'**on élimine les redondances de sélection entre la part de mémoire long terme et la part de mémoire court terme par élimination de contenus présentant le score le plus faible.

**14.** Récepteur selon l'une des revendications 1 à 13, **caractérisé en ce qu'**il comporte des moyens d'apprentissage du profil générique (GUP) à l'initialisation du récepteur sur la base du profil typique et à partir des premiers contenus reçus et de la variation de poids opérée sur la branche (i.j.k) à laquelle appartient chacun de ces contenus, cette variation étant fonction des commandes de l'utilisateur sur le récepteur et du délai au bout duquel les commandes ont été exécutées.

**15.** Récepteur selon la revendication 14, **caractérisé en ce qu'**une consultation d'un contenu donné d'une durée en-deçà d'une première valeur ($t_D$) entraîne une variation négative du poids attaché à cette branche (i.j.k) et une consultation au-delà de cette première valeur entraine une variation positive du poids de celle-ci.

**16.** Récepteur selon la revendication 15, **caractérisé en ce qu'**une consultation du contenu d'une durée supérieure à une seconde valeur ($t_G$) supérieure à la première valeur n'entraîne aucune modification de poids de ladite branche (i.j.k).

**17.** Récepteur selon la revendication 16, **caractérisé en ce qu'**au moins les première et seconde valeurs sont corrigées de manière auto-adaptative en fonction du comportement effectif de l'utilisateur lors du cycle de consultation.

**18.** Récepteur selon l'une des revendications 1 à 17, **caractérisé en ce que** l'archivage d'un contenu reçu par le récepteur (7) dans un délai inférieur à une troisième valeur ($t_B$) n'entraîne aucune variation de poids de la branche (i.j.k) à laquelle appartient le contenu alors qu'un archivage de ce contenu dans un délai supérieur à cette troisième valeur entraîne une variation de poids positive.

**19.** Récepteur, **caractérisé en ce qu'**il appartient au groupe : {récepteur relié à un réseau de diffusion radioélectrique ; ordinateur, portable ou non, relié au réseau internet.}

## FIG_1

## FIG_3

# FIG_2

6

8

#i

9

| ID#i | #i |
|------|-----|

10

| ID#i | d | a$_i$ | b | c | det | pert | | #i |
|------|---|-----|---|---|-----|------|--|-----|

2

11

12

| ID#i | d | a$_i$ | b$_i$ | c$_i$ | det | pert | |
|------|---|-----|-----|-----|-----|------|--|

7

13

| ID#i | d | score |
|------|---|-------|

2

14

| ID#i | #i |
|------|-----|

7

15

16

17

| a$_i$ | b$_i$ | c$_i$ | +1 |
|-----|-----|-----|----|

7

18

## FIG_4

## FIG_5

# FIG_6

Profil long terme

| id# | score | d |
|-----|-------|---|
| id# | score | d |
| | | |
| id# | score | d |
| id# | score | d |
| | | |

$S_{LT}$

Profil court terme

| id# | score | d |
|-----|-------|---|
| id# | score | d |
| | | |

$S_{CT}$

Contenus prioritaires

| id# | score | d |
|-----|-------|---|
| id# | score | d |
| | | |

$S_{Prio}$

## FIG_7

## FIG_8

Actualités
International
Europe
France
Politique
Régions
Social
Société
► Entreprises
Finance
Technologie
Loisirs
Communication
Télévision
Radio
Courrier
Météo
Sports
Formule 1
Voile
Mondial 2002
Ligue des Champions

## FIG_9

## FIG_10

$$0 < \Delta w_{i.j.k} < +d$$

## FIG_11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2809557
- FR 0006691
- FR 2840148